# EUROPÄISCHE PATENTSCHRIFT

(11) **EP 2 407 684 B1**
(45) Veröffentlichungstag und Bekanntmachung des Hinweises auf die Patenterteilung: **31.05.2017**
(21) Anmeldenummer: 11004485.6
(22) Anmeldetag: 01.06.2011
(51) Int. Cl.: F16F 1/371

(54) **Aggregatelager**
Aggregate bearing
Palier de groupe

(30) Priorität: 14.07.2010 DE 102010027169
(43) Veröffentlichungstag der Anmeldung: 18.01.2012
(73) Patentinhaber: Vibracoustic GmbH, 64293 Darmstadt (DE)
(72) Erfinder: Simuttis, Arnold Dr.-Ing., 55545 Bad Kreuznach (DE); Hirsch, Volker Dr.-Ing., 67346 Speyer (DE)
(74) Vertreter: Flügel Preissner Schober Seidel

(56) Entgegenhaltungen:
- EP-A1- 0 957 284
- EP-A2- 2 306 044
- US-A1- 2002 000 688
- US-A1- 2005 051 936
- US-A1- 2006 163 784

## Beschreibung

### Technisches Gebiet

Die Erfindung betrifft ein Aggregatelager, vorzugsweise ein Motor- und Getriebelager.

### Stand der Technik

In dem Vibracoustic-Buch "Schwingungstechnik für Automobile" ISBN 3-00-010-274-4 aus dem Jahr 2002, Seite 237 ff. sind Verbundgusskerne dargestellt, bei denen um eine Schraube mit Bund Kunststoff oder auch Metall (vorzugsweise Aluminium) gegossen wird. Die Verankerung erfolgt durch einen Hinterschnitt in axialer Richtung und ein unregelmäßiges Polygon gegen Drehmoment unterhalb des Bundes im Lagerkern.

Die Abbildung 7 des Dokument US 2002 000 06 88 A1 offenbart ein Aggregatelager mit einem Lagerkern. Klassische Motorlager in Gummi-Metallausführung oder als Hydrolager mit metallischen Lagerkemen erzeugen höhere Lagergewichte und somit Fahrzeuggewichte und damit höhere Kosten durch Verwendung von Metallen für Lagerkerne.

Gleichzeitig leiten Metallteile, ganz besonders das meistens verwendete Aluminium, die Motorwärme besonders gut in die Lager und damit zu den

Gummifedern, die darauf mit einer reduzierten Lebensdauer und stärkeren Verhärtung reagieren.

Für die Befestigung des Motortragarms am Lager werden aus Montagegründen Schrauben verwendet, deren Vorspannkraft nicht über den Kunststoff geleitet werden darf, da Kunststoffe unter Zug besonders stark fließen, was bei erhöhten Temperaturen beschleunigt wird.

Bei der oben genannten Veröffentlichung gibt es den Nachteil, dass nur geringe Auszugskräfte realisiert werden können, während gleichzeitig erheblich höhere Kosten bei der Herstellung des Hinterschnitts und des Polygons entstehen.

Wird eine solche Schraube in einen Kern mit einer Anschraubfläche auf einem hohen Schaft, wie sie für Lager mit Zuganschlagfunktion über den Kern üblich sind, eingegossen, kann die Schraube durch hohe Betriebskräfte leicht aus dem Kern herausgehebelt werden, wodurch das Lager ausfällt. Dies gilt insbesondere dann, wenn eine Anschraubfläche schräg ist.

Es ist die Aufgabe der Erfindung, ein Aggregatelager zur Verfügung zu stellen, bei welchem die Verbindung zwischen Schraube aus Metall und Lagerkern aus Kunststoff verbessert wird, das Heraushebeln der Schraube aus dem Kunststoff vermieden wird und gleichzeitig Gewicht und Kosten für den gesamten Lagerkern zu reduzieren.

### Darstellung der Erfindung

Diese Aufgabe wird erfindungsgemäß durch das im Anspruch 1 angegebene Aggregatelager gelöst. Die abhängigen Ansprüche 2 bis 7 zeigen spezielle Ausführungsformen des Aggregatelagers gemäß Anspruch 1.

Das erfindungsgemäße Aggregatelager hat einen Lagerkern, der den Gummitragkörper eines Aggregatelagers über einen Aggregatetragarm mit einem Aggregat verbindet und einen in dem Lagerkern verankerten Schraubbolzen aus Metall aufweist. Insbesondere ist der Schraubbolzen ein erster Gewindebolzen mit einem Bund, auf dem sich der Aggregatetragarm abstützt und an dem zu dem Bund spiegelsymmetrisch in Bezug auf die Anordnung des ersten Gewindebolzens an dem Bund ein zweiter Gewindebolzen angeformt ist.

Bei dieser Ausgestaltung des Aggregatelagers der vorliegenden Erfindung übernimmt der Bund, der den Aggregatetragarm abstützt, die Schraubenvorspannkräfte. Die Lagerkräfte werden von dem ersten Gewindebolzen über den zum Bund spiegelsymmetrisch am Bund angeformten zweiten Gewindebolzen weitergeleitet.

Die Konstruktion mit zwei Gewindebolzen bzw. als Doppelschraube hat ferner den Vorteil, dass unter dem Bund relativ wenig Platz im Durchmesser benötigt wird. Besonders bei schrägen Anschraubflächen die auf einem hohen Lagerkernschaft angeordnet sind, kann man derartige Schrauben besonders gut umspritzen, ohne dass die Kunststoffwandstärken zu gering werden. Außerdem ist ein langer Gewindebolzen besser geeignet, hohe Biegemomente bei Querbelastung der Gummifeder aufzunehmen und in den Kern zu übertragen.

Vorzugsweise ist der Lagerkern aus Kunststoff, der um den zweiten Gewindebolzen gespritzt ist.

Durch Umspritzen des zweiten Gewindebolzens mit Kunststoff wird eine feste Verbindung zwischen Lagerkern und zweitem Gewindebolzen erzeugt und die Auszugskräfte werden gegenüber dem Stand der Technik erhöht.

Der im Kern eingegossene zweite Gewindebolzen bringt durch die sehr hohen Festigkeiten der eingegossenen Schraube noch eine Versteifung des Lagerkernschafts mit sich. Besonders wirksam wird das bei Lagern mit Anschlaggehäusen, -glocken oder Töpfen, wenn eine geometrische Überdeckung Bolzen/Zuganschlag bei Querbelastungen des Lagers existiert.

Bevorzugt hat der zweite Gewindebolzen dieselbe Länge und denselben Durchmesser wie der erste Gewindebolzen. Der zweite Gewindebolzen könnte andere Längen und Durchmesser als der erste Gewindebolzen haben, jedoch ist eine vollständig symmetrische Gestaltung zum Bund vorzuziehen, weil so der zweite Gewindebolzen beim Umspritzen nicht orientiert im Werkzeug eingelegt werden muss.

Vorzugsweise ist der Umfang des Bunds als Sechseck, Polygon, Torx oder Rändel auf dem Rand ausgestaltet, durch welche Gestaltung des Umfangs des Bunds eine Versicherung gegen Verdrehen des Schraubbolzens erfolgt.

Vorzugsweise ist der Schraubbolzen mit den zwei Gewindebolzen durch Umformen herstellbar. So ist seine Herstellung besonders kostengünstig und hat auch noch den Nutzen einer Festigkeitserhöhung durch die Kaltverfestigung des Stahlwerkstoffes beim Umformen.

Weiterhin kann der zweite Gewindebolzen zur Verankerung im Kunststoff derart ausgestaltet sein, dass er kein eigentliches Gewinde, sondern einem Gewinde ähnliche Eigenschaften aufweist, nämlich mehrere umlaufende Flächen, die einen Hinterschnitt erzeugen. Dabei kann der Bolzen konisch oder abgestuft ausgeführt sein oder nur umlaufende Nuten ohne Steigung eines Gewindes aufweisen. Auch diese Ausführungsform kann durch Umformen kostengünstig hergestellt werden.

Die angegebenen und weitere Merkmale und Einzelheiten der Erfindung werden einem Fachmann auf dem Gebiet aus der folgenden detaillierten Beschreibung und den beigefügten Zeichnungen klarer werden, die Merkmale der vorliegenden Erfindung anhand eines Beispiels darstellen und wobei.

### Kurzbeschreibung der Zeichnung

- Fig. 1: eine Schnittansicht eines Aggregatelagers gemäß der vorliegenden Erfindung zeigt; und
- Fig. 2: eine aufgeschnittene Schrägansicht eines Aggregatelagers gemäß der vorliegenden Erfindung zeigt.

### Ausführung der Erfindung

Im Folgenden wird die vorliegende Erfindung anhand bevorzugter Ausführungsformen unter Bezugnahme auf die beigefügten Zeichnungen detailliert erklärt.

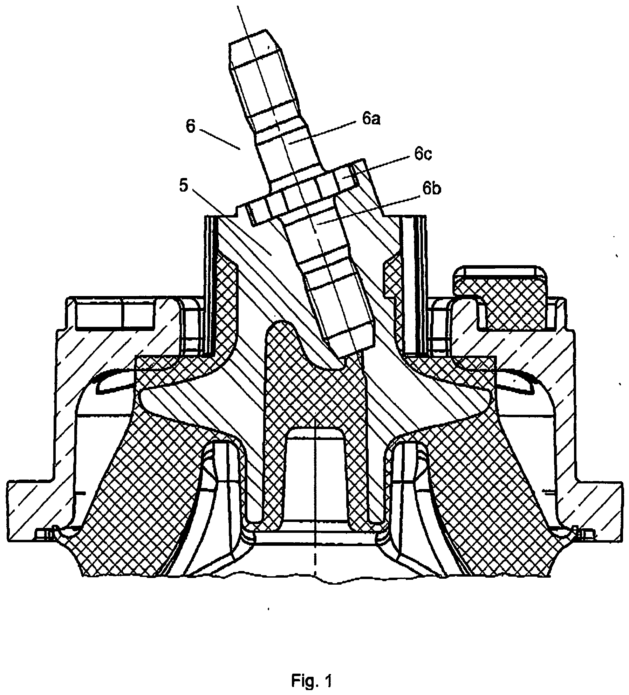

Die Figur 1 zeigt eine Schnittansicht eines Aggregatelagers gemäß der vorliegenden Erfindung, wobei ein Lagerkern (5) gezeigt ist, der den Gummitragkörper eines Aggregatelagers über einen Aggregatetragarm mit einem Aggregat verbindet. In dem Lagerkern (5) ist ein Schraubbolzen (6) aus Metall, vorzugsweise Stahl, verankert. Der Schraubbolzen (6) weist einen ersten Gewindebolzen (6a) mit einem Bund (6c) auf, auf dem sich der Aggregatetragarm abstützt. An dem Bund (6c) ist zu ihm spiegelsymmetrisch ein zweiter Gewindebolzen (6b) angeformt.

Der zweite Gewindebolzen (6c) ist mit Kunststoff umspritzt, welcher den Lagerkern (5) bildet, so dass sich eine feste Verbindung zwischen dem Lagerkern (5) und zweitem Gewindebolzen (6b) ergibt.

Bei dem Ausführungsbeispiel der Figur 1 sind die Längen und Durchmesser der beiden Gewindebolzen (6a, 6b) jeweils gleich. Es ist offensichtlich, dass dies nicht so sein muss und der zweite Gewindebolzen (6b) bezüglich seiner Dimensionen und der Ausgestaltung seines Gewindes unterschiedlich zu dem ersten Gewindebolzen (6a) ausgebildet sein kann.

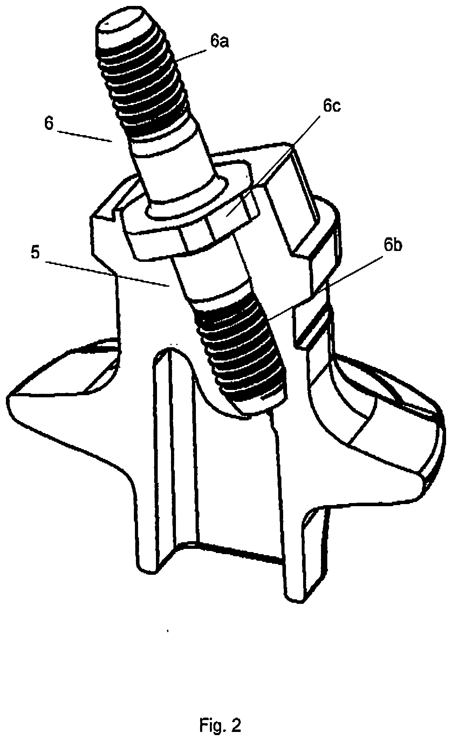

In der Figur 2 ist das Aggregatelager gemäß der vorliegenden Erfindung als aufgeschnittene Schrägansicht gezeigt. Auch hier ist ein Lagerkern (5) gezeigt, der den Gummitragkörper eines Aggregatelagers Ober einen Aggregatetragarm mit einem Aggregat verbindet. In dem Lagerkern (5) ist ein Schraubbolzen (6) aus Metall verankert. Der Schraubbolzen (6) weist einen ersten Gewindebolzen (6a) mit einem Bund (6c) auf, auf dem sich der Aggregatetragarm abstützt. An dem Bund (6c) ist zu ihm spiegelsymmetrisch ein zweiter Gewindebolzen (6b) angeformt.

Der zweite Gewindebolzen (6c) ist mit Kunststoff umspritzt, welcher den Lagerkern (5) bildet, so dass sich eine feste Verbindung zwischen dem Lagerkern (5) und zweitem Gewindebolzen (6b) ergibt.

Auch bel dem Ausführungsbeispiel der Figur 2 sind die Längen und Durchmesser der beiden Gewindebolzen (6a, 6b) jeweils gleich. Zusätzlich ist in der Figur 2 deutlich zu erkennen, dass der Umfang des Bunds (6c) als Sechseck ausgestaltet ist, wodurch eine Versicherung gegen Verdrehen des Schraubbolzens im Lagerkern erfolgt. Hierfür könnte der Umfang des Bunds beispielsweise auch als Polygon, Torx oder als Rändel auf dem Rand ausgestaltet sein.

Der umspritzte zweite Gewindebolzen als Verankerung ist untypisch aber sehr stabil und erhöht die Festigkeit des gesamten Lagerkems bei Querbelastungen und hat sich als besonders preiswert herausgestellt. Bei zum Bund symmetrischer Ausführung kann die Schraube ohne Orientierung ins Spritzgusswerkzeug eingelegt werden, was ebenfalls eine Kostenminimierung bei gleichzeitiger Erhöhung der Festigkeit des ganzen Kerns bewirkt.

## Patentansprüche

1. Aggregatelager mit einem Lagerkern (5), der den Gummitragkörper eines Aggregatelagers über einen Aggregatetragarm mit einem Aggregat verbindet und einen in dem Lagerkern (5) verankerten Schraubbolzen (6) aus Metall aufweist, **dadurch gekennzeichnet, dass** der Schraubbolzen ein erster Gewindebolzen (6a) mit einem Bund (6c) ist, auf dem sich der Aggregatetragarm abstützt und an dem zu dem Bund (6c) spiegelsymmetrisch in Bezug auf die Anordnung des ersten Gewindebolzens (6a) an dem Bund (6c) ein zweiter Gewindebolzen (6b) angeformt ist.

2. Aggregatelager nach Anspruch 1, **dadurch gekennzeichnet, dass** der Lagerkern (5) aus Kunststoff ist, der um den zweiten Gewindebolzen (6b) gespritzt ist.

3. Aggregatelager nach Anspruch 1 oder 2, **dadurch gekennzeichnet, dass** der zweite Gewindebolzen (6b) dieselbe Länge und denselben Durchmesser wie der erste Gewindebolzen (6a) hat.

4. Aggregatelager nach einem der Ansprüche 1 bis 3, **dadurch gekennzeichnet, dass** der zweite Gewindebolzen (6b) zur Verankerung im Lagerkern (5) einem Gewinde ähnliche Eigenschaften, wie mehrere umlaufende Flächen, die einen Hinterschnitt erzeugen, aufweist.

5. Aggregatelager nach einem der Ansprüche 1 bis 4, **dadurch gekennzeichnet, dass** der zweite Gewindebolzen (6b) konisch oder abgestuft ausgeführt ist oder nur umlaufende Nuten ohne Steigung eines Gewindes aufweist.

6. Aggregatelager nach einem der vorangehenden Ansprüche, **dadurch gekennzeichnet, dass** der Umfang des Bunds (6c) als Sechseck, Polygon, Torx oder Rändel auf dem Rand ausgestaltet ist.

7. Aggregatelager nach einem der vorangehenden Ansprüche, **dadurch gekennzeichnet, dass** der Schraubbolzen (6) mit den zwei Gewindebolzen (6a, 6b) durch Umformen herstellbar ist.

## Claims

1. An aggregate mount with a mount core (5) that connects the rubber supporting body of an aggregate mount with an aggregate via an aggregate supporting arm and comprises a stud bolt (6) made of metal and anchored in the mount core (5), **characterized in that** the stud bolt is a first threaded bolt (6a) with a collar (6c) on which the aggregate supporting arm is supported and at which a second threaded bolt (6b) is formed in mirror symmetry in relation to the arrangement of the first threaded bolt (6a) at the collar (6c).

2. The aggregate mount according to claim 1, **characterized in that** the mount core (5) is made of plastic material which is injection molded around the second threaded bolt (6b).

3. The aggregate mount according to claim 1 or 2, **characterized in that** the second threaded bolt (6b) has the same length and the same diameter as the first threaded bolt (6a).

4. The aggregate mount according to any of claims 1 to 3, **characterized in that** the second threaded bolt (6b) has properties similar to a thread for the anchoring in the mount core (5), such as several circumferential surfaces which generate an undercut.

5. The aggregate mount according to any of claims 1 to 4, **characterized in that** the second threaded bolt (6b) is designed conical or stepped or comprises only circumferential grooves without the pitch of a thread.

6. The aggregate mount according to any of the preceding claims, **characterized in that** the circumference of the collar (6c) is designed as a hexagon, polygon, torx or knurl on the edge.

7. The aggregate mount according to any of the preceding claims, **characterized in that** the stud bolt (6) can be manufactured with the two threaded bolts (6a, 6b) by forming.

## Revendications

1. Support de moteur comprenant un coeur de support (5) qui relie le corps porteur en caoutchouc d'un support de moteur via un bras support de moteur avec un moteur, et comprend un goujon de vissage (6) en métal ancré dans le coeur de support (5),
**caractérisé en ce que** le goujon de vissage est un premier goujon fileté (6a) avec une collerette (6c), sur lequel s'appuie le bras support de moteur et sur lequel est conformé un second goujon fileté (6b) symétrique par rapport à la collerette (6c) par référence à l'agencement du premier goujon fileté (6a) sur la collerette (6c).

2. Support de moteur selon la revendication 1, **caractérisé en ce que** le coeur de support (5) est en matière plastique, qui est surmoulé autour du second goujon fileté (6b).

3. Support de moteur selon la revendication 1 ou 2, **caractérisé en ce que** le second goujon fileté (6b) a la même longueur et le même diamètre que le premier goujon fileté (6a).

4. Support de moteur selon l'une des revendications 1 à 3, **caractérisé en ce que** le second goujon fileté (6b) comporte, pour l'ancrage dans le coeur de support (5), des propriétés similaires à un pas de vis, comme plusieurs surfaces périphériques qui produisent une contre-dépouille.

5. Support de moteur selon l'une des revendications 1 à 4, **caractérisé en ce que** le second goujon fileté (6b) est réalisé sous forme conique ou en gradins, ou comporte uniquement des gorges périphériques sans la progression d'un pas de vis.

6. Support de moteur selon l'une des revendications précédentes, **caractérisé en ce que** la périphérie de la collerette (6c) est conçue sous forme hexagonale, polygonale, avec une empreinte torx ou un moletage sur la bordure.

7. Support de moteur selon l'une des revendications précédentes, **caractérisé en ce que** le goujon de vissage (6) avec les deux goujons filetés (6a, 6b) est réalisable par déformation.
